Europäisches Patentamt

European Patent Office

Office européen des brevets

(11) Publication number: **0 181 060**
**A2**

# (12) EUROPEAN PATENT APPLICATION

(21) Application number: **85306034.1**

(22) Date of filing: **23.08.85**

(51) Int. Cl.⁴: **G 01 N 21/76**

(30) Priority: **10.09.84 FI 843538**

(43) Date of publication of application:
**14.05.86 Bulletin 86/20**

(84) Designated Contracting States:
**AT BE CH DE FR GB IT LI LU NL SE**

(71) Applicant: **LABSYSTEMS OY**
**Pulttitie 8**
**SF-00880 Helsinki(FI)**

(72) Inventor: **Heino, Jarmo**
**Korvatunturintie 1 B 18**
**SF-00970 Helsinki(FI)**

(72) Inventor: **Harjunmaa, Hannu**
**Makslahdentie 19 m 38**
**SF-02140 Espoo 14(FI)**

(72) Inventor: **Virnes, Martti**
**Mannerheimintie 134 A 40**
**SF-00270 Helsinki(FI)**

(72) Inventor: **Kainiemi, Aimo**
**Vilniementie 12 B 9**
**SF-02720 Espoo 72(FI)**

(72) Inventor: **Suovaniemi, Osmo**
**Kulopolku 6**
**SF-00570 Helsinki(FI)**

(74) Representative: **Tillbrook, Christopher John**
**c/o Reginald W. Barker & Co. 13, Charterhouse Square**
**London EC1M 6BA(GB)**

(54) **Method and equipment for the measurement of radiation produced in a measurement vessel.**

(57) A method for the measurement of luminescence radiation in which the radiation is measured vertically above of a vessel so that the vessel and the optical system leading to the detector is protected from external radiation.

*Fig.1.*

EP 0 181 060 A2

Method and equipment for the measurement of radiation produced in a measurement vessel

The invention is concerned with a method and with equipment in accordance with the said method for the measurement of radiation produced in a measurement vessel and based on luminescence or on some other phenomenon.

The quantity or intensity of the radiation produced by the luminescence or other phenomenon is directly or indirectly dependent on the quantity (mass) of the substance subject of the measurement in the system in the cuvette (test systems related to the luminescence phenomenon are described, e.g., in the following papers: Immunopharmacology 3, 19-29, 1981, J. Clin. Chem. Clin. Biochem. Vol. 20, 91-94, 1982, Trends in Analytical Chemistry, Vol. 1, 225-227, 1982, and J. Clin. Chem. Clin. Biochem. Vol. 22, 349-356, 1984).

E.g. Patent Application Specifications EP 25350 and EP 71859 disclose some equipments for the measurement of luminescence. In these equipments the radiation is measured through the bottom of the measurement vessel. These equipments, however, are not quite satisfactory, especially because the effect of the background radiation is not eliminated.

The object of the present invention is a method and equipment for the measurement of radiation produced in a measurement vessel. More specifically, the object is a method and apparatus in which the quantity of the radiation measured is dependent only on the quantity of the substance to be measured, and in which the errors caused by the optical properties of the measurement vessel or by background radiation are eliminated.

According to the now invented method, the radiation, which is produced in the measurement vessel, passes substantially in the vertical direction (substantially in the direction of the longitudinal axis of the vessel) and it is measured above the vessel so that the vessel being measured is protected from external radiation or from radiation coming from adjoining vessels.

The measurement vessels are, impenetrable by radiation and/or the stand of the vessel gives the vessel protection against external radiation or against radiation produced in the adjoining vessels. The tip of the detector system is, at least during the measurement, connected with the top face of the vessel or in some other way with the vessel so that external radiation or radiation produced in adjoining vessels does not interfere with the measurement.

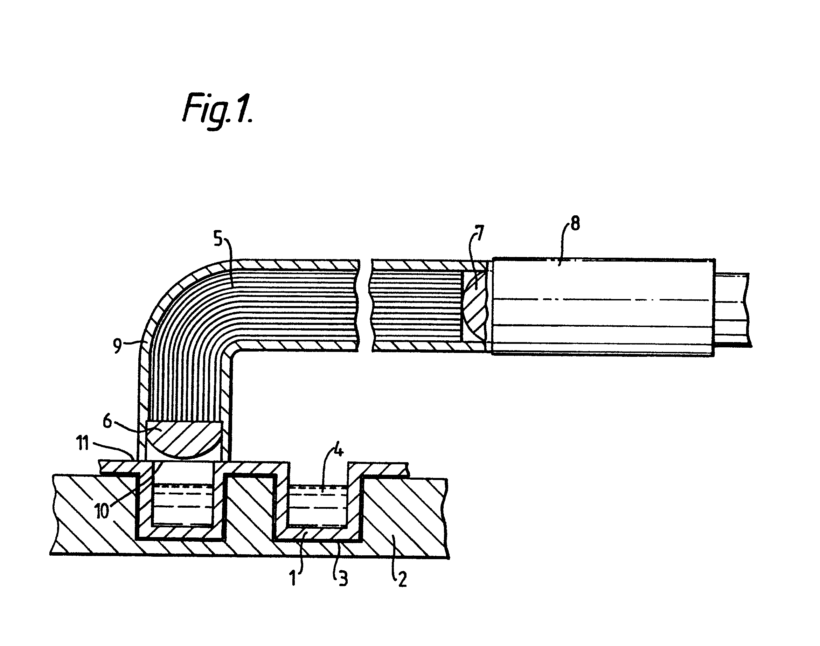

Figure 1 is a schematical illustration of an exemplifying embodiment of the present invention.

In Fig. 1, there are several measurement vessels 1 interconnected as a matrix. The matrix is placed in a stand 2 constructed to receive the vessels in wells 3. Thus the stand acts as a protection for each vessel against external radiation and/or radiation in the adjoining vessel.

The radiation produced by the liquid 4 in the vessel 1 is collected by the intermediate of a bundle of optical fibers 5 and lenses 6 and 7 at the ends of the bundle to a detector 8 collecting radiation. The fiber bundle has a protecting jacket 9. The tip 10 of the jacket is connected optically tightly with the top face 11 of the vessel 1 so that no external radiation will get into the measurement system.

The equipment may further be protected from external radiation so that the equipment is placed in a protective cover which prevents access of radiation to the equipment.

For the measurement the tip 10 is placed on the vessel 1 to be measured by moving the stand 2 or the tip. During the movement the tip 10 may be detached from the top face 11.

. The equipment may also have several detectors, in which case it is possible to measure a corresponding number of vessels at the same time, or at short intervals if common amplifier and measurement electronics are used.

In the present method and equipment, the quantity of the radiation measured is dependent only on the quantity (mass) of the substance subject of measurement, and, consequently, not on its concentration in the vessel.

Evaporation of liquid, errors in liquid dosage, except in respect of the sample, and possible uneven distribution (layer formation) in the vessel do not cause errors in the measurement.

In immunoassays, an amplification of the reaction is obtained so that the area onto which, e.g., the antibody is attached in the vessel is increased, in addition to the circumstance that the enzyme reaction related to the system is measured kinetically.

## Claims

1. Method for the measurement of radiation produced by luminescence or by some other phenomenon in a measurement vessel, c h a r a c t e r i z e d  in that the sample to bo measured is placed in a vessel, which is impenetrable by radiation or is placed in stand preventing external radiation from getting into the vessel, and that the radiation is measured substantially vertically above of the vessel with a detector system the tip of which is connected during the measurement optically tighty with the top face of the vessel to be measured.

2. Equipment for the measurement of radiation produced by luminescence or by some other phenomenon, comprising a vessel or several vessels for the samples, a stand for the vessels, and an optical system with a detector for the measurement of the radiation, and  c h a r a c t e r i z e d  in that in the stand there is a well for each vessel the walls and bottom of the well preventing  radiation from getting into the vessel through its walls or bottom, and that the tip of the optical system is placed optically tightly on the top face of the vessel to be measured.

Fig.1.